# EUROPÄISCHE PATENTSCHRIFT

(11) **EP 2 229 719 B1**
(45) Veröffentlichungstag und Bekanntmachung des Hinweises auf die Patenterteilung: **11.01.2017**
(21) Anmeldenummer: 08857390.2
(22) Anmeldetag: 05.11.2008
(51) Int. Cl.: H02J 9/00

(54) **SCHALTUNGSANORDNUNG ZUM BETREIBEN EINES HAUSGERÄTS**
CIRCUIT CONFIGURATION FOR OPERATING A HOUSEHOLD APPLIANCE
CIRCUITERIE PERMETTANT DE FAIRE FONCTIONNER UN APPAREIL MÉNAGER

(30) Priorität: 05.12.2007 DE 102007058377
(43) Veröffentlichungstag der Anmeldung: 22.09.2010
(73) Patentinhaber: BSH Hausgeräte GmbH, 81739 München (DE)
(72) Erfinder: HELMSCHMIDT, Holger, 93049 Regensburg (DE); HERTLEIN, Anton, 91567 Herrieden (DE)
(86) Internationale Anmeldenummer: PCT/EP2008/064999
(87) Internationale Veröffentlichungsnummer: WO 2009/071410

(56) Entgegenhaltungen:
- EP-A- 0 893 870
- DE-C1- 19 530 594

## Beschreibung

Die vorliegende Erfindung betrifft eine Schaltungsanordnung zum Betreiben eines Hausgeräts, mit einem Schaltnetzteil, mit welchem eine Steuereinheit zum Steuern von Prozessen des Hausgeräts zumindest mittelbar mit Strom versorgbar ist, und mit einem Taster, mittels welchem das Schaltnetzteil mit einem Versorgungsnetz koppelbar ist. Überdies betrifft die Erfindung ein entsprechendes Verfahren.

Derartige Schaltungsanordnungen sind bereits aus dem Stand der Technik als bekannt zu entnehmen. Zum Erzeugen von notwendigen Niederspannungen, beispielsweise 12, 9, 5, 3.3 Volt, umfassen diese Schaltungsanordnungen üblicherweise ein Schaltnetzteil, mittels welchem eine Netzspannung eines Versorgungsnetzes in die genannte Versorgungsgleichspannung umgewandelt wird. In der Regel weisen derartige Schaltungsanordnungen darüber hinaus eine Steuereinheit auf, welche mittelbar oder unmittelbar mit dem Schaltnetzteil gekoppelt ist und eine Steuerung von Prozessen des Hausgeräts bzw. ein Betreiben der Schaltungsanordnungen ermöglicht.

Die Druckschrift EP 0 893 870 A2 beschreibt eine Schaltungsanordnung, welche zum Versorgen eines elektrischen Verbrauchers mit elektrischer Energie dient. Die Schaltungsanordnung beinhaltet einen Netzspannungswandler, welcher aus einer Netzspannung eine Gleichspannung bereitstellt, mit welcher eine Überwachungs- und Steuerungseinrichtung versorgt wird. Die Überwachungs- und Steuerungseinrichtung ermöglicht einen weitgehend netzunabhängigen Stand-by-Betrieb des elektrischen Verbrauchers. Es ist eine Energiespeichereinheit - etwa eine Batterie - bereitgestellt, und die Überwachungs- und Steuerungseinrichtung kann mit Energie aus der Energiespeichereinheit versorgt werden, nämlich mindestens im Stand-by-Betrieb. Ein Schaltelement verbindet den Netzspannungswandler mit dem Spannungsnetz abhängig von einer Steuerinformation der Überwachungs- und Steuerungseinrichtung. Wird die Energiespeichereinheit im Stand-by-Betrieb entladen, so schließt die Überwachungs- und Steuerungseinrichtung das Schaltelement, und die Energiespeichereinheit kann wieder aufgeladen werden.

Aus der Druckschrift DE 195 30 594 C1 ist ein Verfahren sowie eine Vorrichtung zum Reduzieren des Energieverbrauchs bei einem durch einen Spannungswandler versorgten Elektrogerät. Dabei wird während des Betriebs des Geräts der Spannungswandler primärseitig nur kurze Zeiträume mit dem Netz bzw. einer anderen elektrischen Versorgung verbunden. Der Spannungswandler ermöglicht in diesen Zeiträumen neben der Versorgung einer eventuell benötigten Gerätefunktion auch die Aufladung eines geeigneten Energiespeichers, wobei in den Zeiträumen, in denen der Spannungswandler von der Stromversorgung abgetrennt ist, die Funktion des Geräts durch die Energieentnahme aus dem Energiespeicher sichergestellt wird. Der Spannungswandler wird automatisch ans Netz geschaltet, sobald der Energievorrat im Energiespeicher zur Neige geht, um diesen aufzuladen, oder wenn die Gerätefunktion es sonst erfordert.

Als nachteilig an diesem bekannten Verfahren bzw. dieser Vorrichtung ist der Umstand anzusehen, dass in den Zeiträumen, in denen der Spannungswandler von der Stromversorgung abgetrennt ist, eine Selbsthaltung der Vorrichtung im Falle eines längeren Stromausfalls nicht mehr gewährleistet ist, wodurch nur ein unzureichendes Funktionsprinzip ermöglicht ist.

Die Aufgabe der vorliegenden Erfindung besteht darin, eine Schaltungsanordnung sowie ein Verfahren zum Betreiben eines Hausgeräts vorzuschlagen, bei welcher bzw. bei welchem neben einem energieeffizienten Betreiben des Hausgeräts eine zuverlässige Selbsthaltung, insbesondere im Falle eines Stromausfalls, sichergestellt ist.

Diese Aufgabe wird erfindungsgemäß durch eine Schaltungsanordnung mit den Merkmalen gemäß Patentanspruch 1, sowie durch ein Verfahren mit den Merkmalen gemäß Patentanspruch 13, gelöst. Vorteilhafte Ausgestaltungen mit zweckmäßigen Weiterbildungen der Erfindung sind in den abhängigen Patentansprüchen angegeben.

Eine erfindungsgemäße Schaltungsanordnung zum Betreiben eines Hausgeräts umfasst ein Schaltnetzteil, mit welchem eine Steuereinheit zum Steuern von Prozessen des Hausgeräts zumindest mittelbar mit Strom versorgbar ist, und einen Taster, mittels welchem das Schaltnetzteil mit einem Versorgungsnetz koppelbar ist, wobei ein elektrisches Steuerelement parallel zu dem Taster geschaltet ist, welches von dem Schaltnetzteil über einen Steueranschluss zumindest mittelbar ansteuerbar ist, und eine Spannungsspeichereinheit zwischen dem Steueranschluss des elektronischen Steuerelements und einem Bezugspotential geschaltet ist. Unter Hausgeräten werden hier insbesondere elektrische Geräte mit einem automatischen Programmablauf verstanden, die zur Haushaltsführung eingesetzt werden, wie beispielsweise Waschmaschinen, Wäschetrockner, Geschirrspüler oder Gargeräte, die zur Ausführung von Garprogrammen ausgebildet sind.

Insbesondere ist der Taster von einer Bedienperson des Hausgeräts betätigbar und derart ausgebildet, dass er nach einem Betätigen in seine Ausgangsstellung automatisch wiederkehrt und somit den Stromkreis impulsweise schließt. Mit anderen Worten besteht ein Grundgedanke der Erfindung darin, dass ein elektronisches Steuerelement, insbesondere ein Transistor, durch seine zum Taster parallele Anordnung den Taster überbrückt, sobald nach einem Betätigen des Tasters eine Spannung von Seiten des Schaltnetzteils an einem Steueranschluss anliegt. Auf diese Art und Weise wird sichergestellt, dass nach einem kurzzeitigen, impulsweisen Versorgen des Schaltnetzteils mittels des Tasters das Schaltnetzteil über das parallel zu dem Taster geschaltete Steuerelement mit Strom versorgt wird. Durch eine intelligente Verwendung einer Spannungsspeichereinheit, welche zwischen dem Steueranschluss und einem Bezugspotential gekoppelt ist, und im Betrieb aufgeladen werden kann, wird erreicht, dass selbst im Falle eines Stromausfalls von Seiten des Versorgungsnetzes das elektronische Steuerelement nach Wiederkehr der Netzspannung unmittelbar angesteuert und das Schaltnetzteil mit Strom versorgt wird. Insbesondere durch die geschickte Spannungsspeichereinheit wird es mit geringem Aufwand möglich, die Elektronik im ausgeschalteten Zustand auf eine Leistungsaufnahme von 0 Watt zu bringen.

Vorzugsweise ist das elektronische Steuerelement ein FET (Feldeffekttransistor), insbesondere ein MOS-FET, und der Steueranschluss ein Gate-Pol. Hierdurch wird ein verlustloses Betreiben des Hausgeräts sowie ein zuverlässiges Schalten und Selbsthalten ermöglicht.

Bevorzugt ist die Spannungsspeichereinheit ein Pufferkondensator, eine Batterie oder ein Akkumulator. Insbesondere bei einem Pufferkondensator wird ein rasches Aufladen bzw. ein gezieltes Entladen gewährleistet.

In einer Ausführungsform ist eine Spannungsbegrenzungsdiode zwischen dem Steueranschluss und dem Bezugspotential parallel zu der Spannungsspeichereinheit geschaltet. Bevorzugt ist ein Entladewiderstand zwischen dem Steueranschluss und dem Bezugspotential parallel zu der Spannungsspeichereinheit geschaltet. Durch die Spannungsbegrenzungsdiode wird erreicht, dass die an dem Steueranschluss anliegende Spannung einen bestimmten Grenzwert nicht überschreiten kann. Hierdurch wird gewährleistet, dass zugunsten der Sicherheit der durch das Steuerelement fließende und das Schaltnetzteil versorgende Strom nicht beliebig ansteigen kann.

Gemäß einer Ausführungsform ist der Schaltungsanordnung ein Transformator zugeordnet, dessen Primärwicklung mit dem Schaltnetzteil gekoppelt ist, und dessen Sekundärwicklung mit einer Elektronik, insbesondere mit der Steuereinheit des Hausgeräts, gekoppelt ist, wobei eine Hilfswicklung vorgesehen ist, über welche das elektronische Steuerelement von dem Schaltnetzteil ansteuerbar ist. Der Transformator ermöglicht es, einerseits eine Elektronik, insbesondere die Steuereinheit, mit einer benötigten Niederspannung über die Sekundärwicklung zu versorgen, und andererseits über die Hilfswicklung das elektronische Steuerelement anzusteuern und somit die Selbsthaltung der Schaltungsanordnung zu gewährleisten.

Bevorzugt sind zwischen der Hilfswicklung und dem Steueranschluss des elektronischen Steuerelements eine Gleichrichtungsdiode und ein Widerstand geschaltet, wobei die Hilfswicklung vorzugsweise auf eine Steuerspannung, insbesondere eine Gate-Source-Spannung, ausgelegt ist. Diese Steuerspannung kann beispielsweise 10 Volt betragen. Durch das Netzteil einschließlich der Gleichrichtungsdiode und des Widerstands wird eine Gleichrichtung der an dem Steueranschluss des Steuerelements anliegenden Spannung erreicht, und gewährleistet, dass an dem Steueranschluss ausschließlich eine positive Spannung auftreten kann. Ist das Schaltnetzteil im Betrieb, wird das elektronische Steuerelement unmittelbar über die Hilfswicklung angesteuert und die Versorgung des Schaltnetzteils hält sich selbst. Insbesondere ist für die Ansteuerung eines selbst sperrenden Transistors eine Spannung an dem Steueranschluss, insbesondere einem Gate-Pol, notwendig, wobei diese bauteilabhängig ist und vorzugsweise 10 Volt betragen kann. Insbesondere kann die notwendige Steuerspannung durch Erhöhung der Wicklungsspannung der Hilfswicklung bzw. durch Verwendung einer Spannungsverdopplungsschaltung erzeugt werden. Von besonderer Bedeutung ist, dass eine ausreichende Steuerspannung an dem Steueranschluss des elektronischen Steuerelements bereitgestellt wird, um eine Ansteuerung des Steuerelements zu ermöglichen.

Vorzugsweise ist ein Schalter vorgesehen, mittels welchem der Steueranschluss mit einem Bezugspotential koppelbar ist, wobei der Schalter bevorzugt von der Steuereinheit ansteuerbar ist. Insbesondere ist der Schalter parallel zu der Spannungsspeichereinheit geschaltet. Wird der Schalter geschlossen, so wird der Steueranschluss mit dem Bezugspotential gekoppelt und die Spannungsspeichereinheit entladen. Insbesondere nach Beendigung eines Prozesses des Hausgeräts kann hierdurch der Steueranschluss mit dem Bezugspotential kurzgeschlossen und somit das Schaltnetzteil durch Sperren der Stromzufuhr ausgeschaltet werden. Hierdurch wird gewährleistet, dass das Schaltnetzteil im ausgeschalteten Zustand des Hausgeräts keinen Wirkstrom mehr aufnehmen kann.

In einer Ausführungsform ist ein Betätigen des Tasters im Betrieb des Hausgeräts von der Steuereinheit erkennbar. Insbesondere erhält die Steuereinheit ein Signal, welches im Hinblick auf die Betätigung des Tasters auswertbar ist. Hierdurch wird jederzeit ein Ausschalten des Hausgeräts durch eine Bedienperson ermöglicht.

Wie oben geschildert, wird durch die Schaltungsanordnung erreicht, dass bei einem Netzspannungsausfall der Betriebszustand des Schaltnetzteils durch die Spannungsspeichereinheit erhalten wird. Nach Wiedereinsetzen der Netzspannung läuft das Schaltnetzteil aufgrund der an dem Steueranschluss anliegenden und von der Spannungsspeichereinheit gespeicherten Spannung wieder an. Die Zeitdauer der Überbrückung wird insbesondere durch die Größe der Kapazität, der Selbstentladung und weitere bauteilsspezifische Größen der Spannungsspeichereinheit und den Wert des Entladewiderstands festgelegt. Des Weiteren wird durch die Steuereinheit sowie den Schalter eine Auto-Shut-Off-Funktion des Hausgeräts ermöglicht. Überdies weist die Schaltungsanordnung im ausgeschalteten Zustand 0 Watt Leistungsaufnahme auf. Außerdem wird durch die Schaltungsanordnung mit geringem Aufwand eine Überbrückung von Netzausfällen gewährleistet.

Ein erfindungsgemäßes Verfahren ist zum Betreiben eines Hausgeräts mit einer Schaltungsanordnung ausgelegt. Die Schaltungsanordnung weist dabei ein Schaltnetzteil auf, mit welchem eine Steuereinheit zum Steuern von Prozessen des Hausgeräts zumindest mittelbar mit Strom versorgt wird. Abhängig von einem Betätigen eines Tasters wird das Schaltnetzteil mit einem Versorgungsnetz gekoppelt, wobei ein parallel zu dem Taster geschaltetes elektronisches Steuerelement vorgesehen ist, welches von dem Schaltnetzteil über einen Steueranschluss zumindest mittelbar angesteuert wird, und mittels einer zwischen dem Steueranschluss des elektronischen Steuerelements und einem Bezugspotential geschalteten Spannungsspeichereinheit die an dem Steueranschluss anliegende elektrische Spannung gespeichert wird.

Bei dem Verfahren ist bevorzugt das elektronische Steuerelement ein FET, insbesondere ein MOS-FET, und der Steueranschluss ein Gate-Pol.

Vorzugsweise wird der Schaltungsanordnung ein Transformator zugeordnet, dessen Primärwicklung mit dem Schaltnetzteil gekoppelt wird, und dessen Sekundärwicklung mit einer Elektronik, insbesondere mit der Steuereinheit des Hausgeräts, gekoppelt wird, wobei über eine Hilfswicklung des Transformators das elektronische Steuerelement von dem Schaltnetzteil angesteuert wird.

Bei dem Verfahren wird die Hilfswicklung bevorzugt auf eine Steuerspannung, insbesondere eine Gate-Source-Spannung, ausgelegt. Diese Steuerspannung ist bauteilabhängig und kann vorzugsweise 10 Volt betragen.

Bevorzugt wird der Steueranschluss mit einem Bezugspotential mittels eines Schalters gekoppelt, wobei der Schalter vorzugsweise von der Steuereinheit angesteuert wird.

Bei dem Verfahren wird ein Betätigen des Tasters im Betrieb des Hausgeräts von der Steuereinheit erkannt.

Die mit Bezug auf die erfindungsgemäße Schaltungsanordnung vorgestellten bevorzugten Ausführungsformen und insbesondere deren Vorteile gelten entsprechend für das erfindungsgemäße Verfahren.

Weitere Vorteile, Merkmale und Einzelheiten der Erfindung ergeben sich aus der nachfolgenden Beschreibung eines bevorzugten Ausführungsbeispiels sowie anhand der Zeichnungen. Es zeigen:
Fig. 1 ein schematisches Blockschaltbild einer Schaltungsanordnung gemäß einem bevorzugten Ausführungsbeispiel der Erfindung; und
Fig. 2 die Schaltungsanordnung gemäß dem Ausführungsbeispiel.

In den Figuren sind gleiche bzw. funktionsgleiche Elemente mit gleichen Bezugszeichen versehen.

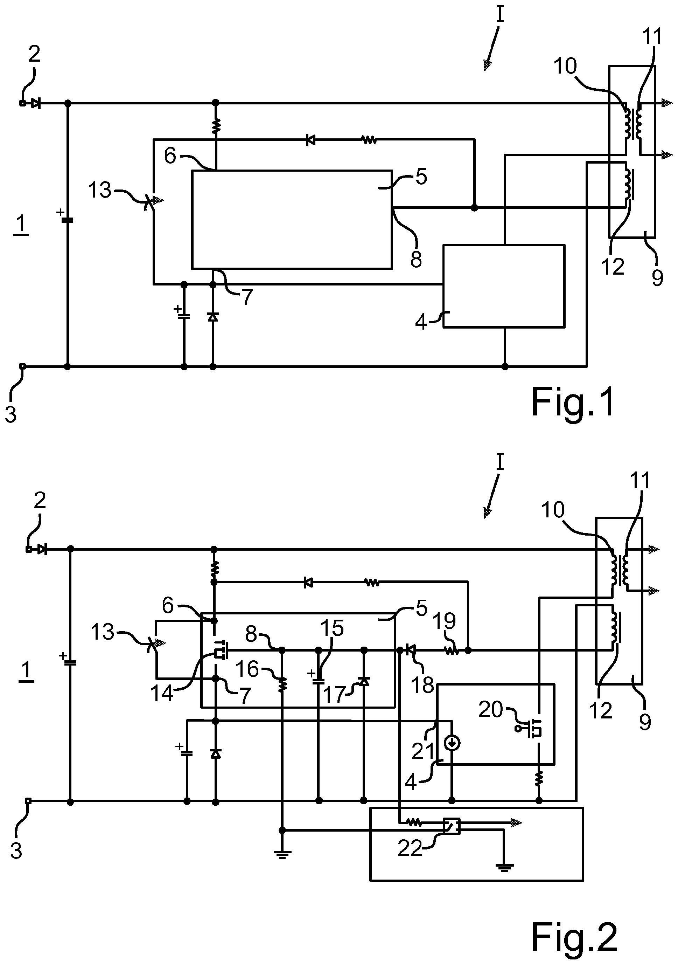

Eine in Fig. 1 zum Teil schematisch dargestellte Schaltungsanordnung I umfasst einen an ein Versorgungsnetz angeschlossenen Eingang 1 einschließlich eines Phasenleiterpols 2 sowie eines Neutralleiterpols 3. Zwischen dem Phasenleiterpol 2 und dem Neutralleiterpol 3 liegt somit eine Netzspannung an. Die wiedergegebene Schaltungsanordnung I ist zum Betreiben eines Hausgeräts ausgebildet und umfasst ein Schaltnetzteil 4, welches ausgelegt ist, die Netzspannung in eine Versorgungsgleichspannung zur Versorgung einer nicht dargestellten Steuereinheit zum Steuern von Prozessen des Hausgeräts, beispielsweise eines Mikrokontrollers, zu wandeln. Das Hausgerät kann dabei insbesondere eine Waschmaschine, ein Trockner oder ein Waschtrockner sein.

Die Schaltungsanordnung I weist eine in Fig. 1 schematisch dargestellte, selbsthaltende Schaltung 5 auf, welche zwei Anschlusselektroden 6, 7 sowie einen Steueranschluss 8 umfasst. Die selbsthaltende Schaltung 5 ist über den Steueranschluss 8 sowie einen Transformator 9 mit dem Schaltnetzteil 4 gekoppelt. Überdies ist die selbsthaltende Schaltung 5 über die Anschlusselektroden 6, 7 einerseits mit dem Phasenleiterpol 2 und andererseits mit dem Neutralleiterpol 3 gekoppelt. Der Neutralleiterpol 3 stellt vorliegend ein Bezugspotential dar und wird nachstehend als Bezugspotential bezeichnet. Die selbsthaltende Schaltung 5 ist derart ausgebildet, dass durch eine an dem Steueranschluss 8 anliegende Steuerspannung der Stromfluss zwischen den beiden Anschlusselektroden 6, 7 gesteuert wird. Liegt an dem Steueranschluss 8 eine elektrische Spannung, so fließt durch die Anschlusselektroden 6, 7 Strom.

Der Transformator 9 umfasst eine Primärwicklung 10, welche mit dem Phasenleiterpol 2 sowie über das Schaltnetzteil 4 mit dem Bezugspotential 3 gekoppelt ist, und eine Sekundärwicklung 11, über welche die Steuereinheit des Hausgeräts bzw. eine Elektronik mit einer Versorgungsgleichspannung versorgt wird. Darüber hinaus weist der Transformator 9 eine Hilfswicklung 12 auf, welche mit dem Steueranschluss 8 der selbsthaltenden Schaltung 5 gekoppelt ist. Wird das Schaltnetzteil 4 bestromt, so fließt über die Primärwicklung 10 und somit über die Hilfswicklung 12 Strom, so dass die selbsthaltende Schaltung 5 über den Steueranschluss 8 angesteuert wird.

Die Schaltungsanordnung I umfasst ferner einen Taster 13, welcher vorliegend von einer Bedienperson des Hausgeräts betätigbar ist. Der Taster 13 ist derart ausgebildet, dass er nach einem Betätigen in seine Ausgangsstellung zurückkehrt, so dass der Stromkreis pulsweise geschlossen wird.

In Fig. 2 ist eine mögliche Ausführung der in Fig. 1 dargestellten Schaltungsanordnung I wiedergegeben. Wie in Fig. 2 eingezeichnet, umfasst die selbsthaltende Schaltung 5 ein elektronisches Steuerelement 14, welches vorliegend als ein Feldeffekttransistor, insbesondere ein MOS-FET, ausgebildet ist. Die Anschlusselektroden 6, 7 der selbsthaltenden Schaltung 5 stellen somit entsprechend einen Drain-Pol bzw. einen Source-Pol des Transistors 14 dar. Der Steueranschluss 8 ist ein Gate-Pol des Transistors 14. Die selbsthaltende Schaltung 5 weist ferner eine den Steueranschluss 8 mit dem Bezugspotential 3 koppelnde Spannungsspeichereinheit 15 auf, welche vorliegend als ein Pufferkondensator ausgebildet ist. Parallel zu der Spannungsspeichereinheit 15 sind ein Entladewiderstand 16 sowie eine Spannungsbegrenzungsdiode 17 geschaltet, wobei mittels der Spannungsbegrenzungsdiode 17 die an dem Steueranschluss 8 anliegende Spannung zugunsten der Sicherheit begrenzbar ist. Der Entladewiderstand 16 liegt die Größe der Selbstentladung der Spannungsspeichereinheit 15 fest.

Der Steueranschluss 8 ist nun mit der Hilfswicklung 12 des Transformators 9 über eine Gleichrichtungsdiode 18 sowie einen in Reihe dazu geschalteten Widerstand 19 gekoppelt. Dieses kleine Netzteil einschließlich der Gleichrichtungsdiode 18 und des Widerstands 19 hat die Funktion der Gleichrichtung der an dem Steueranschluss 8 anliegenden Spannung. Hierdurch wird gewährleistet, dass an dem Steueranschluss 8 ausschließlich eine positive Spannung auftreten kann.

Das Schaltnetzteil 4 umfasst einen in Fig. 2 schematisch dargestellten Transistor 20, mittels welchem über eine Steuerelektrode 21 der Stromfluss über die Primärwicklung 10 gesteuert wird. Liegt an der Steuerelektrode 21 elektrische Spannung an, so fließt über den Transistor 20 Strom.

Die Schaltungsanordnung I weist ferner einen Schalter 22 auf, welcher von der Steuereinheit des Hausgeräts ansteuerbar ist, und mittels welchem die Möglichkeit eingeräumt wird, die Spannungsspeichereinheit 15 zu entladen. Hierzu ist der Schalter 22 einerseits mit dem Steueranschluss 8 des elektronischen Steuerelements 14 und andererseits mit dem Bezugspotential 3 gekoppelt. Wird der Schalter 22 geschlossen, so wird der Steueranschluss 8 mit dem Bezugspotential 3 kurzgeschlossen. Hierdurch wird gewährleistet, dass die Spannungsspeichereinheit 15 jederzeit durch Schließen des Schalters 22 entladen werden kann.

Nachfolgend wird die Funktionsweise der Schaltungsanordnung I gemäß dem Ausführungsbeispiel näher erläutert. Wird der Taster 13 durch eine Bedienperson betätigt und somit geschlossen, so fließt über den Taster 13 und die Steuerelektrode 21 des Schaltnetzteils 4 Strom. Durch diese an dem Schaltnetzteil 4 anliegende Spannung wird der Transistor 20 des Schaltnetzteils 4 angesteuert, so dass über die Primärwicklung 10 des Transformators 9 Strom fließt. Anschließend wird die Hilfswicklung 12 bestromt und das elektronische Steuerelement 14 über den Steueranschluss 8 von Seiten der Hilfswicklung 12 angesteuert. Das elektronische Steuerelement 14 wird nun niederohmig, so dass die Anschlusselektroden 6, 7 praktisch kurzgeschlossen werden. Der Taster 13 kann nun in seine Ausgangsstellung gebracht werden (automatisch) und die Versorgung des Schaltnetzteils 4 "hält sich selbst".

Für die Ansteuerung des selbstsperrenden MOS-FETs ist eine Spannungsdifferenz von 10 Volt (bauteilabhängig) zwischen dem Gate-Pol und dem Source-Pol notwendig. Dies kann durch Erhöhung der Wicklungsspannung der Hilfswicklung 12 bzw. durch Verwendung einer in Fig. 2 nicht dargestellten Spannungsverdopplungsschaltung erreicht werden. Von großer Bedeutung ist, dass eine ausreichende Steuerspannung für das elektronische Steuerelement 14 bereitgestellt wird.

Ziel ist es nun, das Schaltnetzteil 4 bzw. das Hausgerät nach Beendigung eines Prozesses auszuschalten. Hierzu ist die Steuereinheit derart ausgelegt, dass der Schalter 22 anschließend nach Beendigung eines Prozesses des Hausgeräts geschlossen wird. Somit wird der Steueranschluss 8 mit dem Bezugspotential 3 gekoppelt und das elektronische Steuerelement 14 sperrt daraufhin die Spannungszufuhr des Schaltnetzteils 4. Hierdurch wird gewährleistet, dass das Schaltnetzteil 4 keine Leistung mehr aufnehmen kann. Die Schaltungsanordnung I zeichnet sich somit mit 0 Watt Leistungsaufnahme im ausgeschalteten Zustand aus.

Tritt ein Netzspannungsausfall auf, so wird durch die geschickte Verwendung der Spannungsspeichereinheit 15 der Betriebszustand des Schaltnetzteils 4 erhalten. Denn an dem Steueranschluss 8 liegt über die zuvor geladene Spannungsspeichereinheit 15, selbst beim Ausfall der Netzspannung, Spannung an. Nach Wiedereinsetzen der Netzspannung wird das elektronische Steuerelement 14 somit direkt angesteuert und das Schaltnetzteil 4 läuft anschließend wieder an.

## Patentansprüche

1. Schaltungsanordnung (I) zum Betreiben eines Hausgeräts, mit einem Schaltnetzteil (4), mit welchem eine Steuereinheit zum Steuern von Prozessen des Hausgeräts zumindest mittelbar mit Strom versorgbar ist, und mit einem Taster (13), mittels welchem das Schaltnetzteil (4) mit einem Versorgungsnetz koppelbar ist, wobei
ein elektronisches Steuerelement (14) parallel zu dem Taster (13) geschaltet ist, welches von dem Schaltnetzteil (4) über einen Steueranschluss (8) zumindest mittelbar ansteuerbar ist, und eine Spannungsspeichereinheit (15) zwischen dem Steueranschluss (8) des elektronischen Steuerelements (14) und einem Bezugspotential (3) geschaltet ist, so dass nach einer Rückkehr einer Netzspannung des Versorgungsnetzes nach einem Ausfall des Versorgungsnetzes das Schaltnetzteil (4) aufgrund der an dem Steueranschluss (8) anliegenden Spannung der Spannungsspeichereinheit (15) direkt wieder anläuft.

2. Schaltungsanordnung (I) nach Anspruch 1, **dadurch gekennzeichnet, dass** das elektronische Steuerelement (14) ein FET, insbesondere ein MOS-FET, und der Steueranschluss (8) ein Gate-Pol ist.

3. Schaltungsanordnung (I) nach Anspruch 1 oder 2, **dadurch gekennzeichnet, dass** die Spannungsspeichereinheit (15) ein Pufferkondensator, eine Batterie oder ein Akkumulator ist.

4. Schaltungsanordnung (I) nach einem der vorhergehenden Ansprüche, **dadurch gekennzeichnet, dass** eine Spannungsbegrenzungsdiode (17) zwischen dem Steueranschluss (8) und dem Bezugspotential (3) parallel zu der Spannungsspeichereinheit (15) geschaltet ist.

5. Schaltungsanordnung (I) nach einem der vorhergehenden Ansprüche, **dadurch gekennzeichnet, dass** ein Entladewiderstand (16) zwischen dem Steueranschluss (8) und dem Bezugspotential (3) parallel zu der Spannungsspeichereinheit (15) geschaltet ist.

6. Schaltungsanordnung (I) nach einem der vorhergehenden Ansprüche, **dadurch gekennzeichnet, dass** der Schaltungsanordnung (I) ein Transformator (9) zugeordnet ist, dessen Primärwicklung (10) mit dem Schaltnetzteil (4) gekoppelt ist, und dessen Sekundärwicklung (11) mit einer Elektronik, insbesondere mit der Steuereinheit des Hausgeräts, gekoppelt ist, wobei eine Hilfswicklung (12) vorgesehen ist, über weiche das elektronische Steuerelement (14) von dem Schaltnetzteil (4) ansteuerbar ist.

7. Schaltungsanordnung (I) nach Anspruch 6, **dadurch gekennzeichnet, dass** zwischen der Hilfswicklung (12) und dem Steueranschluss (8) des elektronischen Steuerelements (14) eine Gleichrichtungsdiode (18) und ein Widerstand (19) geschaltet sind.

8. Schaltungsanordnung (I) nach Anspruch 6 oder 7, **dadurch gekennzeichnet, dass** die Hilfswicklung (12) auf eine Steuerspannung, insbesondere eine Gate-Source-Spannung, ausgelegt ist.

9. Schaltungsanordnung (I) nach einem der vorhergehenden Ansprüche, **dadurch gekennzeichnet, dass** ein Schalter (22) vorgesehen ist, mittels welchem der Steueranschluss (8) mit einem Bezugspotential (3) koppelbar ist.

10. Schaltungsanordnung (I) nach Anspruch 9, **dadurch gekennzeichnet, dass** der Schalter (22) von der Steuereinheit ansteuerbar ist.

11. Schaltungsanordnung (I) nach einem der vorhergehenden Ansprüche, **dadurch gekennzeichnet, dass** ein Betätigen des Tasters (13) im Betrieb des Hausgeräts von der Steuereinheit erkennbar ist.

12. Hausgerät, insbesondere zur Pflege von Wäschestücken, mit einer Schaltungsanordnung (I) nach einem der Ansprüche 1 bis 11.

13. Verfahren zum Betreiben eines Hausgeräts, mit einer Schaltungsanordnung (I), welche ein Schaltnetzteil (4) aufweist, mit welchem eine Steuereinheit zum Steuern von Prozessen des Hausgeräts zumindest mittelbar mit Strom versorgt wird, und abhängig von einem Betätigen eines Tasters (13) das Schaltnetzteil (4) mit einem Versorgungsnetz gekoppelt wird, wobei
ein parallel zu dem Taster (13) geschaltetes elektronisches Steuerelement (14) vorgesehen ist, weiches von dem Schaltnetzteil (4) über einen Steueranschluss (8) zumindest mittelbar angesteuert wird, und mittels einer zwischen dem Steueranschluss (8) des elektronischen Steuerelements (14) und einem Bezugspotential (3) geschalteten Spannungsspeichereinheit (15) die an dem Steueranschluss (8) anliegende elektrische Spannung gespeichert wird, so dass nach einer Rückkehr einer Netzspannung des Versorgungsnetzes nach einem Ausfall des Versorgungsnetzes das Schaltnetzteil (4) aufgrund der an dem Steueranschluss (8) anliegenden Spannung der Spannungsspeichereinheit (15) direkt wieder anläuft.

14. Verfahren nach Anspruch 13, **dadurch gekennzeichnet, dass** das elektronische Steuerelement (14) ein FET, insbesondere ein MOS-FET, und der Steueranschluss (8) ein Gate-Pol ist.

15. Verfahren nach Anspruch 13 oder 14, **dadurch gekennzeichnet, dass** der Schaltungsanordnung (I) ein Transformator (9) zugeordnet wird, dessen Primärwicklung (10) mit dem Schaltnetzteil (4) gekoppelt wird, und dessen Sekundärwicklung (11) mit einer Elektronik, insbesondere mit der Steuereinheit des Hausgeräts, gekoppelt wird, wobei über eine Hilfswicklung (12) des Transformators (9) das elektronische Steuerelement (14) von dem Schaltnetzteil (4) angesteuert wird.

16. Verfahren nach Anspruch 15, **dadurch gekennzeichnet, dass** die Hilfswicklung (12) auf eine Steuerspannung, insbesondere eine Gate-Source-Spannung, ausgelegt wird.

17. Verfahren nach einem der Ansprüche 13 bis 16, **dadurch gekennzeichnet, dass** mittels eines Schalters (22) der Steueranschluss (8) mit einem Bezugspotential (3) gekoppelt wird.

18. Verfahren nach Anspruch 17, **dadurch gekennzeichnet, dass** der Schalter (22) von der Steuereinheit angesteuert wird.

19. Verfahren nach einem der Ansprüche 13 bis 18, **dadurch gekennzeichnet, dass** ein Betätigen des Tasters (13) im Betrieb des Hausgeräts von der Steuereinheit erkannt wird.

## Claims

1. Circuit configuration (I) for operating a household appliance, having a switching power supply (4), by means of which a control unit can be at least indirectly supplied with current for controlling processes of the household appliance, and having a pushbutton (13), by means of which the switching power supply (4) can be coupled to a supply grid, wherein an electronic control element (14) is connected in parallel with the pushbutton (13) and can be actuated at least indirectly by the switching power supply (4) by way of a control connection (8), and a voltage storage unit (15) is connected between the control connection (8) of the electronic control element (14) and a reference potential (3), so that after a line voltage is restored following a failure of the supply grid the switching power supply (4) immediately restarts on account of the voltage present at the control connection (8) and stored by the voltage storage unit (15).

2. Circuit configuration (I) according to claim 1, **characterised in that** the electronic control element (14) is a FET, in particular a MOS-FET, and the control connection (8) is a gate pole.

3. Circuit configuration (I) according to claim 1 or 2, **characterised in that** the voltage storage unit (15) is a buffer capacitor, a battery or an accumulator.

4. Circuit configuration (I) according to one of the preceding claims, **characterised in that** a voltage limiting diode (17) is connected between the control connection (8) and the reference potential (3) in parallel with the voltage storage unit (15).

5. Circuit configuration (I) according to one of the preceding claims, **characterised in that** a discharge resistor (16) is connected between the control connection (8) and the reference potential (3) in parallel with the voltage storage unit (15).

6. Circuit configuration (I) according to one of the preceding claims, **characterised in that** the circuit configuration (I) has associated with it a transformer (9), the primary winding (10) of which is coupled to the switching power supply (4) and the secondary winding (11) of which is coupled to an electronics unit, in particular to the control unit of the household appliance, whereby an auxiliary winding (12) is provided, by means of which the electronic control element (14) can be actuated by the switching power supply (4).

7. Circuit configuration (I) according to claim 6, **characterised in that** a rectifying diode (18) and a resistor (19) are connected between the auxiliary winding (12) and the control connection (8) of the electronic control element (14).

8. Circuit configuration (I) according to claim 6 or 7, **characterised in that** the auxiliary winding (12) is designed for a control voltage, in particular a gate-to-source voltage.

9. Circuit configuration (I) according to one of the preceding claims, **characterised in that** a switch (22) is provided by means of which the control connection (8) can be coupled to a reference potential (3).

10. Circuit configuration (I) according to claim 9, **characterised in that** the switch (22) can be actuated by the control unit.

11. Circuit configuration (I) according to one of the preceding claims, **characterised in that** an activation of the pushbutton (13) during operation of the household appliance can be recognised by the control unit.

12. Household appliance, in particular for the care of items of laundry, having a circuit configuration (I) according to one of claims 1 to 11.

13. Method for operating a household appliance, having a circuit configuration (I) which has a switching power supply (4), by means of which a control unit is at least indirectly supplied with current for controlling processes of the household appliance and, depending on the activation of a pushbutton (13), the switching power supply (4) is coupled to a supply grid, wherein an electronic control element (14) connected in parallel with the pushbutton (13) is provided which is actuated at least indirectly by the switching power supply (4) by way of a control connection (8), and the electrical voltage present at the control connection (8) is stored by means of a voltage storage unit (15) connected between the control connection (8) of the electronic control element (14) and a reference potential (3), so that after a line voltage is restored following a failure of the supply grid the switching power supply (4) immediately restarts on account of the voltage present at the control connection (8) and stored by the voltage storage unit (15).

14. Method according to claim 13, **characterised in that** the electronic control element (14) is a FET, in particular a MOS-FET, and the control connection (8) is a gate pole.

15. Method according to claim 13 or 14, **characterised in that** the circuit configuration (I) has associated with it a transformer (9), the primary winding (10) of which is coupled to the switching power supply (4) and the secondary winding (11) of which is coupled to an electronics unit, in particular to the control unit of the household appliance, whereby the electronic control element (14) is actuated by the switching power supply (4) by way of an auxiliary winding (12) of the transformer (9).

16. Method according to claim 15, **characterised in that** the auxiliary winding (12) is designed for a control voltage, in particular a gate-to-source voltage.

17. Method according to one of claims 13 to 16, **characterised in that** the control connection (8) is coupled to a reference potential (3) by means of a switch (22).

18. Method according to claim 17, **characterised in that** the switch (22) is actuated by the control unit.

19. Method according to one of claims 13 to 18, **characterised in that** an activation of the pushbutton (13) during operation of the household appliance is recognised by the control unit.

## Revendications

1. Dispositif de commutation (I) pour l'exploitation d'un appareil ménager, avec un bloc à découpage (4), avec lequel une unité de commande pour la commande de processus de l'appareil ménager peut au moins être indirectement alimentée en électricité, et avec un bouton-poussoir (13) permettant de coupler le bloc à découpage (4) à un réseau d'alimentation, dans lequel un élément de commande électronique (14) est connecté parallèlement au bouton-poussoir (13), lequel élément peut au moins être indirectement commandé par le bloc à découpage (4) via une gâchette (8), et une unité d'emmagasinage de tension (15) installée entre la gâchette (8) de l'élément de commande électronique (14) et un potentiel de référence (3) de sorte qu'après un rétablissement d'une tension de réseau du réseau d'alimentation suite à une panne de celui-ci, le bloc à découpage (4) se met à nouveau directement en marche en raison de la tension de l'unité d'emmagasinage de tension (15) présente au niveau de la gâchette (8).

2. Dispositif de commutation (I) selon la revendication 1, **caractérisé en ce que** l'élément de commande électronique (14) est un FET, en particulier un MOS-FET, et la gâchette (8) est un Gate-Pol.

3. Dispositif de commutation (I) selon la revendication 1 ou 2, **caractérisé en ce que** l'unité d'emmagasinage de tension (15) est un condensateur tampon, une batterie ou un accumulateur.

4. Dispositif de commutation (I) selon l'une des revendications précédentes, **caractérisé en ce qu'**une diode de limitation de la tension (17) est installée entre la gâchette (8) et le potentiel de référence (3), parallèlement à l'unité d'emmagasinage de tension (15).

5. Dispositif de commutation (I) selon l'une des revendications précédentes, **caractérisé en ce qu'**une résistance de décharge (16) est installée entre la gâchette (8) et le potentiel de référence (3), parallèlement à l'unité d'emmagasinage de tension (15).

6. Dispositif de commutation (I) selon l'une des revendications précédentes, **caractérisé en ce qu'**un transformateur (9) est affecté au dispositif de commutation (I), dont l'enroulement primaire (10) est couplé au bloc à découpage (4) et dont l'enroulement secondaire (11) est couplé à un élément électronique, en particulier à l'unité de commande de l'appareil ménager, un enroulement auxiliaire (12) via lequel l'élément de commande électronique (14) peut être commandé par le bloc à découpage (4) étant prévu.

7. Dispositif de commutation (I) selon la revendication 6, **caractérisé en ce qu'**une diode de redressement (18) et une résistance (19) sont installées entre l'enroulement auxiliaire (12) et la gâchette (8) de l'élément de commande électronique (14).

8. Dispositif de commutation (I) selon la revendication 6 ou 7, **caractérisé en ce que** l'enroulement auxiliaire (12) est dimensionné en fonction d'une tension de commande, en particulier d'une tension Gate-Source.

9. Dispositif de commutation (I) selon l'une des revendications précédentes, **caractérisé en ce qu'**un commutateur (22) permettant de coupler la gâchette (8) à un potentiel de référence (3) est prévu.

10. Dispositif de commutation (I) selon la revendication 9, **caractérisé en ce que** le commutateur (22) peut être commandé par l'unité de commande.

11. Dispositif de commutation (I) selon l'une des revendications précédentes, **caractérisé en ce que** l'unité de commande perçoit un actionnement du bouton-poussoir (13) durant le fonctionnement de l'appareil ménager.

12. Appareil ménager, en particulier pour le traitement du linge, avec un dispositif de commutation (I) selon l'une des revendications 1 à 11.

13. Procédé d'exploitation d'un appareil ménager, avec un dispositif de commutation (I) présentant un bloc à découpage (4), avec lequel une unité de commande pour la commande de processus de l'appareil ménager est au moins indirectement alimentée en électricité, le bloc à découpage (4) étant couplé à un réseau d'alimentation en fonction de l'actionnement d'un bouton-poussoir (13), dans lequel un élément de commande électronique (14) connecté parallèlement au bouton-poussoir (13) est prévu, lequel élément est au moins indirectement commandé par le bloc à découpage (4) via une gâchette (8), et une unité d'emmagasinage de tension (15) installée entre la gâchette (8) de l'élément de commande électronique (14) et un potentiel de référence (3) emmagasine la tension électrique présente au niveau de la gâchette (8) de sorte qu'après un rétablissement d'une tension de réseau du réseau d'alimentation suite à une panne de celui-ci, le bloc à découpage (4) se met à nouveau directement en marche en raison de la tension de l'unité d'emmagasinage de tension (15) présente au niveau de la gâchette (8).

14. Procédé selon la revendication 13, **caractérisé en ce que** l'élément de commande électronique (14) est un FET, en particulier un MOS-FET, et la gâchette (8) est un Gate-Pol.

15. Procédé selon la revendication 13 ou 14, **caractérisé en ce qu'**un transformateur (9) est affecté au dispositif de commutation (I), dont l'enroulement primaire (10) est couplé au bloc à découpage (4) et dont l'enroulement secondaire (11) est couplé à un élément électronique, en particulier à l'unité de commande de l'appareil ménager, l'élément de commande électronique (14) étant commandé par le bloc à découpage (4) via un enroulement auxiliaire (12) du transformateur (9).

16. Procédé selon la revendication 15, **caractérisé en ce que** l'enroulement auxiliaire (12) est dimensionné en fonction d'une tension de commande, en particulier d'une tension Gate-Source.

17. Procédé selon l'une des revendications 13 à 16, **caractérisé en ce que** la gâchette (8) est couplée à un potentiel de référence (3) via un commutateur (22).

18. Procédé selon la revendication 17, **caractérisé en ce que** le commutateur (22) est commandé par l'unité de commande.

19. Procédé selon l'une des revendications 13 à 18, **caractérisé en ce que** l'unité de commande perçoit un actionnement du bouton-poussoir (13) durant le fonctionnement de l'appareil ménager.
